# EUROPÄISCHE PATENTSCHRIFT

(11) **EP 0 596 301 B1**
(45) Veröffentlichungstag und Bekanntmachung des Hinweises auf die Patenterteilung: **19.06.1996**
(21) Anmeldenummer: 93116698.7
(22) Anmeldetag: 15.10.1993
(51) Int. Cl.: G02B 7/00, G02B 7/182

(54) **Vorrichtung zum Justieren von optischen Bauelementen, insbesondere zum Justieren eines Multi-Mirror-Polygons**
Device for adjusting optical elements, in particular for adjusting a multi-mirror-polygon
Dispositif d'ajustage d'éléments optiques, notamment pour fabriquer un polygone à miroirs multiples

(30) Priorität: 01.11.1992 DE 4236795
(43) Veröffentlichungstag der Anmeldung: 11.05.1994
(73) Patentinhaber: FRAUNHOFER-GESELLSCHAFT ZUR FÖRDERUNG DER ANGEWANDTEN FORSCHUNG E.V., D-80636 München (DE)
(72) Erfinder: Guyenot, Volker, Dr., D-07749 Jena (DE); Tittelbach, Günther, Dr., D-07745 Jena (DE); Damm, Christoph, D-07743 Jena (DE)

(56) Entgegenhaltungen:
- EP-A- 0 258 569
- DD-A- 208 239
- DE-A- 3 106 914
- US-A- 4 936 670

## Beschreibung

Die Erfindung betrifft eine Vorrichtung zum Justieren von optischen Bauelementen, insbesondere zum Herstellen eines multi-mirror-Polygons.

Die Erfindung wird vorzugsweise bei der Herstellung und einer wiederholten Nachjustierung von Multi-Mirror-Polygonen, die aus einzelnen auf eine Grundplatte montierten Spiegelbaugruppen bestehen, genutzt. Die erfindungsgemäße Vorrichtung kann auch für ähnlich gelagerte präzise Justieraufgaben auf dem Gebiet der Feinwerktechnik für mechanische und optische Baugruppen verwendet werden.

In der Feinwerktechnik sind eine Vielzahl von Stell- und Justierprinzipien bekannt (Naumann, Schröder, Krause). Ohne die Prinzipien im einzelnen darzustellen, haben sie doch alle gemeinsam, daß das Problem der Klemmung während der Justierung ungenügend gelöst ist. Beispielsweise erfolgt die Justage eines Spiegelträgers so, daß die Klemmung während der Justierung gelöst wird. Beim erneuten Klemmen sind unkontrollierbare Lageveränderungen der zu justierenden Baugruppe geradezu unvermeidlich. Bei der Verwendung von Festgelenken, Federaufhängungen usw. werden dauerhaft Kräfte in das System eingetragen. Diese Kräfte können sich nach einiger Zeit lösen bzw. mechanische Spannungen im System aufbauen und die eingestellte Lage der Baugruppe nachträglich verändern.

Es ist auch ein drehbarer Mehrflächenspiegel in einem optischen System bekannt, bei dem die winkelversetzt angeordneten Teilspiegel des Mehrflächenspiegels an einem gemeinsamen drehbaren Träger jeweils einzeln mit justierbaren Befestigungen angebracht sind (DE 31 06 914 C2). Die Teilspiegel sind dabei an jeweils einem im drehbaren Träger radial angeordneten und verdrehbaren Bolzen stirnseitig befestigt.

Es ist ferner ein Spiegelpolygon bekannt, das aus einer stabilen, kreisförmigen Grundplatte und aus Spiegelkörper bzw. Spiegelflächen tragenden Segmenten besteht (DD 208 239). Um eine Dejustierung der einzelnen Segmente auch bei hohen Drehzahlen des Spiegelpolygons zu vermeiden, besitzen die Einzelsegmente zusätzlich zur drehachsenseitigen Verschraubung eine spiegelseitige Verschraubung mit der Grundplatte, wobei zwischen einem Einzelsegment und der Grundplatte ein den Pyramidalfehler festlegendes, zur spiegelseitigen Verschraubung gehörendes Distanzstück angeordnet ist.

Auch diese Art Justierung mittels Schrauben oder Bolzen ist mit den vorgenannten Nachteilen behaftet.

Die Erfindung soll eine verspannungsfreie hochgenaue Justierung mechanischer und/oder optischer Baugruppen der eingangs genannten Art ermöglichen, die eine hohe zeitliche Stabilität hat, ohne daß zusätzliche Kräfte in das mechanische System eingeleitet werden müssen. Der Justagevorgang soll automatisierbar sein.

Die Aufgabe wird erfindungsgemäß durch die Merkmale des Anspruchs 1 gelöst.

Demgemäß ist mindestens ein mit dem Gestell verbundener mechanischer Impulsgeber vorgesehen, der so an das Gestell angebaut ist, daß er auf das mindestens eine zu justierende Bauelement einwirken kann. Der mindestens eine mechanische Impulsgeber wirkt dabei mit mindestens einem Impuls in der Art eines bewegten Hammers auf eine Halterung des zu justierenden Bauelementes so ein, daß eine vorgesehene Justageendstellung des Bauelementes erreichbar ist.

Der mechanische Impulsgeber für die Erzeugung der Stellwege ist vorzugsweise ein elektromagnetisch betriebenes Schlagwerk zur Erzeugung exakt dosierter, quasi mechanischdigitalisierter Impulse. Durch Einwirken dieser Impulse auf das an sich festgespannte Bauelement wird das zu justierende Bauelement in die Sollage bewegt. Die Vorrichtung beinhaltet erfindungsgemäß weiterhin eine Meßeinrichtung, die die Lage des zu justierenden Bauelementes ermittelt. Diese Meßeinrichtung ist mit der automatischen Steuerung verbunden, welche elektrische Impulse so an die mechanischen Impulsgeber gibt, daß Richtung, Stärke und Anzahl der ausgeübten Klopfimpulse gesteuert werden.

Die Aufspannung der Bauelemente auf der Grundplatte erfolgt vorzugsweise durch eine kraftschlüssige Klemmung, die bereits vor der notwendigen Justierung mit der für den Betriebszustands des Bauelementes erforderlichen Haltekraft beauflagt ist. Die Halterung des Bauelementes erfolgt vorzugsweise in einem kugelpfannenförmigen Lager.

Die Baugruppe ist in einem Fall ein Einzelspiegel, der mit seiner Halterung auf einer Grundplatte aufgespannt montiert ist.

Die Baugruppe ist in einem zweiten Fall ein aus einzelnen Spiegelbaugruppen hergestelltes Multi-Mirror-Polygon, dessen Spiegelflächen nach innen oder nach außen gerichtet sind. Die Spiegelflächen können plan, konkav, konvex, zylindrisch, parabolisch ausgeführt sein oder eine andere mathematisch bestimmte Form haben.

Der mindestens eine mechanische Impulsgeber ist zur Justierung der Baugruppen an die Grundplatte an- und abkoppelbar, wobei die Ankoppelstelle als Verschraubung, Klemmung oder Bajonetthalterung ausgeführt ist. Der mechanische Impulsgeber ist ein elektromagnetisch betriebenes Schlagwerk, welches einen zentrisch gelagerten Schlagstift hat. Der mechanische Impulsgeber kann auch Impulse, die durch hydraulische oder pneumatische Druckänderungen hervorgerufene Kräfte und/oder mit Hilfe eines Federmechanismus erzeugt worden sind, benutzen.

Die Justiervorrichtung zeichnet sich dadurch aus, daß vorzugsweise zwei mechanische Impulsgeber in Y-Richtung und zwei mechanische Impulsgeber in Z-Richtung an dem Gestell befestigt sind. Die Befestigung an dem Gestell erfolgt so, daß alle mechanischen Impulsgeber an- und abkoppelbar sind.

Die mechanischen Impulsgeber sind so an dem Gestell angebaut, daß der Schlagstift jedes mechanischen Impulsgebers auf einen Hebel einer Halterung des zu justierenden Bauelementes in Y-Richtung, entgegen der Y-Richtung, in Z-Richtung und entgegen der Z-Richtung aufschlagen kann.

Die mechanischen Impulsgeber stehen vorteilhafterweise nur während des Justiervorgangs in einer zeitweiligen Verbindung mit der Grundplatte bzw. der zu justierenden Baugruppe. Der Mechanismus zur Justage ist während der normalen Funktion der Baugruppe vollständig abgekoppelt und/oder entfernt. Die mechanischen Impulsgeber und die dazugehörige Meß- und Steuereinrichtung stören in keiner Weise den Geräteaufbau und die Funktion der Baugruppe.

Die mechanischen Impulsgeber können deshalb multivalent eingesetzt werden.

Die Erfindung soll nachstehend anhand von Ausführungsbeispielen und zugehörigen Zeichnungen nähere erläutert werden.

Es zeigen:
- Figur 1a, b:: Justierprinzip
- Figur 2:: Elektromechanischer Impulsgeber
- Figur 3:: Justierung eines Einzelspiegels
- Figur 4:: Justierung eines Multi-Mirror-Polygons mit nach außen gerichteten Spiegeln
- Figur 5:: Justierung eines Multi-Mirror-Polygons mit nach innen gerichteten Spiegeln

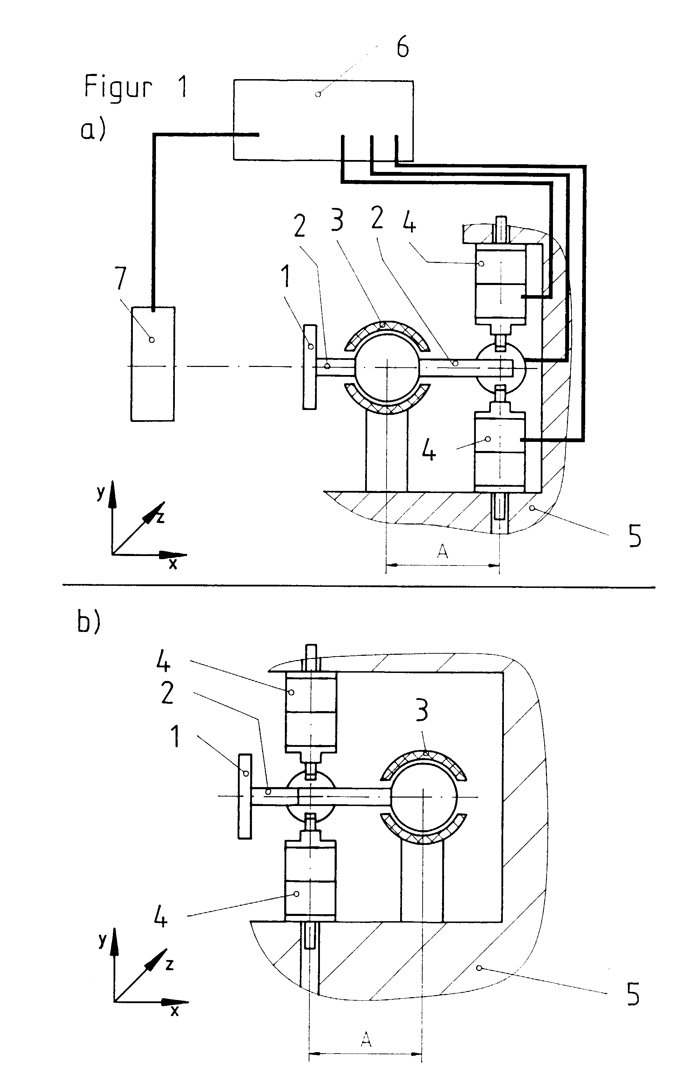

Figur 1 stellt das Prinzip der Vorrichtung zum Justieren einer optischen Baugruppe dar. Ein zu justierender Spiegel 1 ist an einer Halterung 2 befestigt und an der Halterung 2 in einer Klemmung 3 festgehalten. Die Halterung 2 bildet im Zusammenhang mit der Klemmung 3 einen zweiarmigen Hebel (Figur 1a) oder einen einarmigen Hebel (Figur 1b). An einer Grundplatte eines Gestells 5 ist die Klemmung 3 befestigt.

Im Abstand A ist mindestens ein mechanischer Impulsgeber 4 auf die Grundplatte des Gestells 5 so montiert, daß Schlagstifte 10 auf die Halterung 2 einschlagen können.

Je ein mechanischer Impulsgeber 4 ist in Y-Richtung, entgegen der Y-Richtung, in Z-Richtung und entgegen der Z-Richtung angeordnet. Die vier mechanischen Impulsgeber 4 sind mit einer Steuereinrichtung 6 elektrisch verbunden.

Eine Meßvorrichtung 7 ermittelt Meßwerte über die aktuelle Position des Spiegels 1. Die Steuereinrichtung 6 verarbeitet die von der Meßeinrichtung 7 gewonnenen Meßwerte so, daß die mechanischen Impulsgeber 4 so angesteuert werden, daß mechanische Impulse so auf die Halterung 2 einwirken, daß ein vorgegebener Justagezustand des Spiegels 1 erreicht wird.

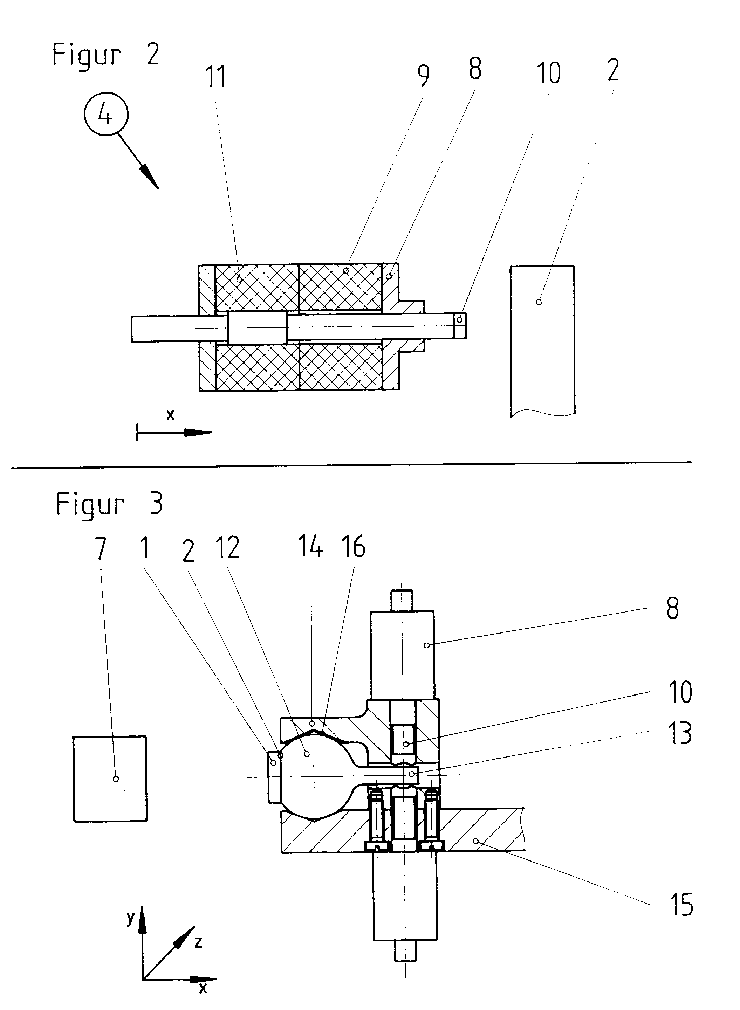

Der mechanische Impulsgeber 4 ist in Figur 2 im Prinzip dargestellt.
In einem Gehäuse 8 sind elektrische Spulen 9 und 11 angeordnet.
In der Mitte des Gehäuses 8 ist ein Schlagstift 10 gelagert.
Durch die elektrische Ansteuerung der Spulen wird der Schlagstift 10 in Y-(Z-)Richtung oder entgegen der Y-(Z-)Richtung auf die Halterung 2 ausgelenkt.

Die Schlagspule 9 erhält eine Steuerspannung von der Steuereinrichtung 6 entsprechend der Information von der Meßeinrichtung. Die Schlag-Spule 9 erhält einen zeitlich definierten elektrischen Impuls, wodurch der Schlagstift 10 in Richtung der Halterung 2 beschleunigt wird.

Bereits vor dem Aufprall des Schlagstifts 10 auf die Halterung 2 wird die elektrische Spannung abgeschaltet, der Schlagstift 10 fliegt, lediglich durch die Reibung beeinflußt, im freien Flug weiter und überträgt den mitgeführten mechanischen Impuls m * v auf die Halterung 2 beim Aufprall. Die Masse des Schlagstifts 10 ist mit m gekennzeichnet, die Geschwindigkeit beim freien Flug ist v. Um den Impuls m * v verlustarm zu übertragen, muß annähernd ein elastischer Stoß erfolgen. Dieser Forderung kann durch entsprechende Materialauswahl der Halterung 2 und des Schlagstifts 10 an seiner Spitze nachgekommen werden.
Exakt im Moment des Aufpralls wird nunmehr die Rückzug-Spule 11 mit einer Spannung beauflagt, die den Schlagstift 10 zurückzieht und auch in seiner Ausgangsstellung fixiert. Dadurch werden Mehrfachprallerscheinungen verhindert, außerdem ist die Lage des Schlagstiftes 10 definiert.

Eine Ausführung der Vorrichtung zum Justieren ist für eine Einzelspiegel-Baugruppe in Figur 3 dargestellt.

Es besteht die Aufgabe, daß ein Spiegel 1 im vorgegebenen Toleranzbereich zum Koordinatensystem x, y, z dauerhaft justiert werden soll. Dabei wird, wie im optischen Präzisionsgerätebau üblich, davon ausgegangen, daß zum Abschluß der Montage der einzelnen Bauteile eine einmalige oder zu bestimmten Zeitpunkten zu wiederholende Justierung der Bauteile, insbesondere der optischen Bauelemente, erforderlich ist.

Der Spiegel 1 ist mit einer Klebverbindung an einem Kugelteil 12 als Halterung 2 befestigt. Das Kugelteil 12 hat an der dem Spiegel 1 gegenüberliegenden Seite einen Ansatz 13. Das Kugelteil 12 ist in einem vorgespannten zweiteiligen Halbkugel-Gegenlager als Klemmung 3 so stabil und fest gehaltert, wie das für den Gebrauch der Spiegel-Baugruppe und die maximal zu erwartende Belastung notwendig ist. Die Vorspannung wird durch Zugspannung erzeugende Schrauben-Verbindungen hergestellt, indem ein Halbkugel-Oberteil 14 und ein Halbkugel-Unterteil 15 (entspricht der Klemmung 3 und dem Gestell 5 in Figur 1) auf das spiegelhaltende Kugelteil 12 (entspricht der Halterung 2 in Figur 1) gepreßt werden.

Die an das Gestell 5 (Halbkugel-Oberteil 14 und Halbkugel-Unterteil 15) angebauten mechanischen Impulsgeber 4 und die kugelpfannenförmige Lagerung (Klemmung 3) des Einzelspiegels 1 erlauben Kippbewegungen in den zwei Raumrichtungen Y und Z.

Die Justierung des Einzelspiegel 1 erfolgt mittels der fein dosierten Klopfimpulse, die durch die mechanischen Impulsgeber 4 auf den Ansatz 13 einwirken, in die gewünschte Lage.

Auf den Ansatz 13 werden während der erforderlichen Justierung des Spiegels 1 von dem mechanischen Impulsgeber 4 Klopfimpulse übertragen, wodurch eine Verkippung des Kugelteils 12 im Lager und damit eine Lageveränderung des Spiegels 1 bewirkt wird. Diese Verkippung wird entlang der Koordinaten Y und Z vorgenommen.

Die Meßeinrichtung 7, die die Spiegellage ermittelt, kann verschiedenartig aufgebaut sein. Beispielsweise kann sie nach Art eines Autokollimationsfernrohrs funktionieren oder positionsempfindliche Halbleiterbauelemente als Signalgeber beinhalten oder in Art einer CCD-Kamera mit Bildverarbeitung aufgebaut sein.

Es wird lediglich von der Meßeinrichtung 7 verlangt, daß mit Hilfe der Steuereinrichtung 6 ein eindeutiges Steuersignal ausgegeben wird, ob in Y- bzw. Z-Richtung eine Lageveränderung des Spiegels 1 notwendig ist oder nicht.

Es ist vorteilhafterweise nicht notwendig, die exakte Größe der Verstellung zu bestimmen. Nach Auslösen einer elektrischen Impulsfolge auf die Schlag-Spule 9 wird der Spiegel 1 step by step solange verschoben, bis eine Abschaltschwelle erreicht und unterschritten wird. Damit ist die Justierung beendet, ohne daß die Klemmung des Kugelteils 12 im Lager während der Justierung verändert wird.

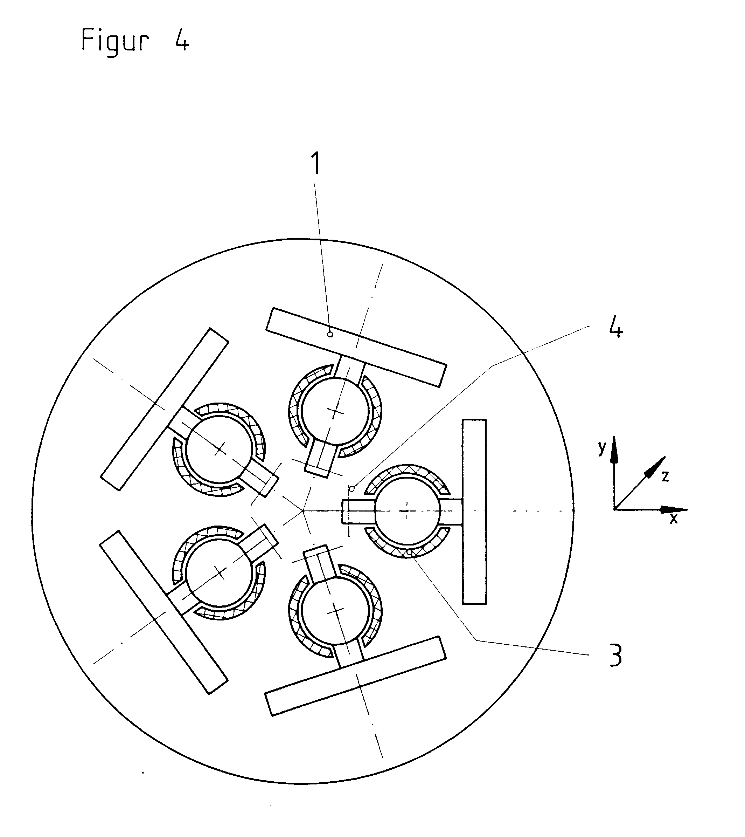

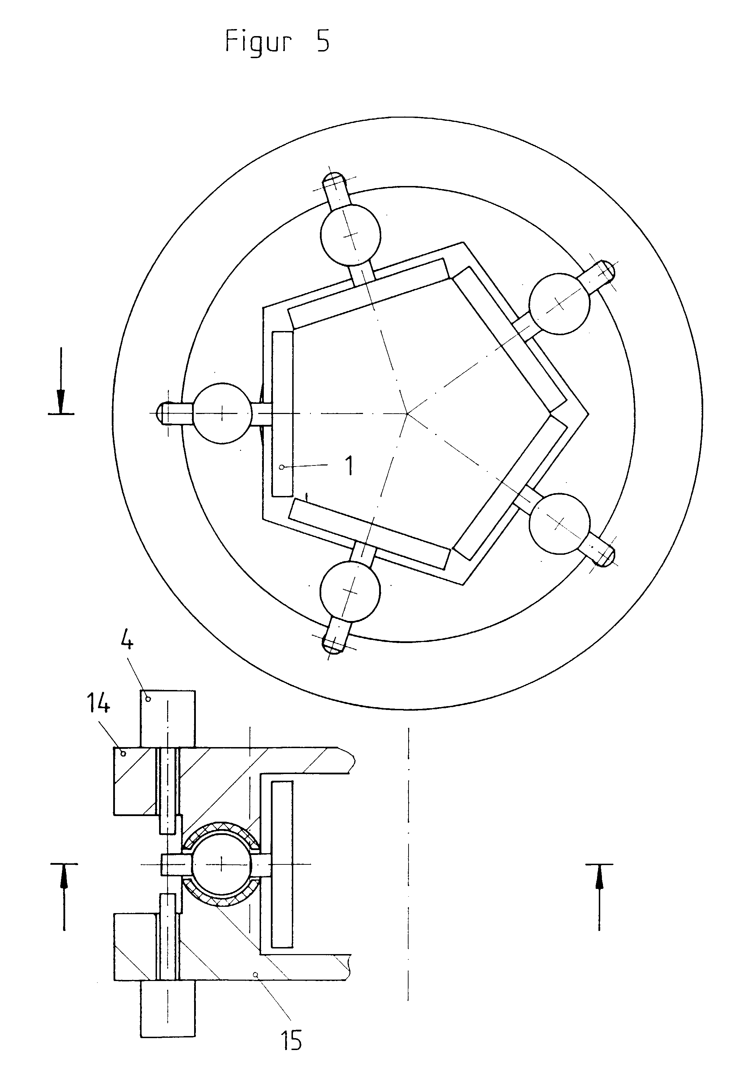

Die Erfindung wird insbesondere zur Justage von Multi-Mirror-Polygonen verwendet (Figuren 4 und 5).

Figur 4 zeigt ein aus einzelnen Spiegelbaugruppen bestehendes Multi-Mirror-Polygon, dessen Spiegelflächen nach außen gerichtet sind. Das multi-mirror-Polygon muß nach der Justage eine geringe Abweichung der charakteristischen Parameter - wie Einzelteilungs- und Summenteilungsfehler, Pyramidalfehler und Abweichung von der Ebenheit der einzelnen optisch wirksamen Flächen - zeitlich stabil gewährleisten. Die Justierstellen werden bereits vor der notwendigen Justierung (entsprechend Figur 3) bezüglich der Fixierung der Einzelspiegel 1 mit der für den Betriebszustand erforderlichen Haltekraft durch die Klemmung 3 beauflagt.

Ein aus einzelnen Spiegelbaugruppen bestehendes Polygon mit nach innen gerichteten Spiegeln zeigt Figur 5. Das Halbkugel-Oberteil 14 und das Halbkugel-Unterteil 15 ist hierbei ringförmig mit den halbkugelförmigen Aussparungen zur Halterung des Kugelteils 12 ausgeführt, wobei im Schnittbild der Figur 5 die zeitweilig montierten mechanischen Impulsgeber 4 für die Koordinate Y zu erkennen sind. Das Halbkugel-Oberteil 14 und das Halbkugel-Unterteil 15 werden durch Schrauben oder Federkräfte zusammengehalten (entspricht der Grundplatte 5 und der Halterung 3 in Figur 1). Diese Teile klemmen die einzelnen Kugelteile 12 (Halterung 2).

Bei beiden Ausführungen (Figuren 4 und 5) wird eine, für normale Betriebsbedingungen und die maximal zu erwartende mechanische Belastung, ausreichend starre Fixierung der Einzelspiegel 1 zur Grundplatte 5 gewährleistet. Während der Justierung sind keinerlei Klemmund Lösevorgänge an den Einzelspiegeln 1, an der Klemmung 3 oder der Grundplatte 5 erforderlich.

Vorteilhafterweise bleiben die Spannverhältnisse und damit die Belastung des Spiegels 1 einschließlich seiner Halterung 2 und der Grundplatte 5 während der Justierung und während des Gebrauches unverändert. Dadurch wird eine hohe Konstanz der Spiegellage erreicht.

Nach Beendigung der Justierung weist das Multi-Mirror-Polygon eine geringe Abweichung der charakteristischen Parameter, wie Einzelteilungs- und Summenteilungsfehler, Pyramidalfehler und Abweichung von der Ebenheit der einzelnen optisch wirksamen Flächen auf.

### Aufstellung der verwendeten Bezugszeichen

- 1: Spiegel
- 2: Halterung
- 3: Klemmung
- 4: Impulsgeber
- 5: Gestell
- 6: Steuereinrichtung
- 7: Meßeinrichtung
- 8: Gehäuse
- 9: Schlag-Spule
- 10: Schlagstift
- 11: Rückzug-Spule
- 12: Kugelteil
- 13: Ansatz
- 14: Halbkugel-Oberteil
- 15: Halbkugel-Unterteil

## Patentansprüche

1. Vorrichtung zum Justieren eines optischen Bauelements (1), insbesondere zum Justieren eines Multi-Mirror-Polygons, mit einem Gestell (5) und mindestens einer mit dem Gestell verbundenen Klemmvorrichtung (3) zur Befestigung einer Halterung (2) für das zu justierende Bauelement (1) mit einer erforderlichen Haltekraft,
mit mindestens einem mit dem Gestell (5) verbundenen mechanischen Impulsgeber (4), der so auf die Halterung des zu justierenden Bauelements (1) einwirkt, daß die Halterung (2) in der Klemm vorrichtung bewegt und eine vorgesehene Justageendstellung, erreicht wird, wobei der mindestens eine mechanische Impulsgeber (4) in der Art eines bewegten Hammers auf die Halterung (2) des zu justierenden Bauelementes (1) mit einem Impuls einwirkt.

2. Vorrichtung nach Anspruch 1,
bei der die Ist-Lage des Bauelementes (1) mit einer Meßeinrichtung (7) bestimmbar ist, die Meßeinrichtung (7) mit einer Stelleinrichtung (6) verbunden ist, in der die Ist-Lage mit der Soll-Lage vergleichbar ist und die Stelleinrichtung (6) mit mindestens einem Impulsgeber (4) so verbunden ist, daß mindestens ein mechanischer Impuls so erzeugbar ist, daß das Bauelement (1) in die Soll-Lage bewegbar ist.

3. Vorrichtung nach Anspruch 1,
bei der das Bauelement mindestens ein Spiegel (1) ist, der mit der Halterung (2) mittels der Klemmvorrichtung auf einer das Gestell bildenden Grundplatte (5) aufgespannt montiert ist.

4. Vorrichtung nach Anspruch 3,
bei der die Aufspannung auf der Grundplatte (5) mittels der Klemmvorrichtung eine kraftschlüssige Klemmung ist, die bereits vor der notwendigen Justierung mit der für den Betriebszustand des Bauelementes (1) erforderlichen Haltekraft beaufschlagt ist.

5. Vorrichtung nach den Ansprüchen 1 bis 4,
mit zusätzlichen, aus einzelnen Spiegeln gebildeten Bauelementen, die ein (1) Multi-Mirror-Polygon darstellen, dessen Spiegelflächen nach innen oder nach außen gerichtet sind.

6. Vorrichtung nach Anspruch 1,
bei der mindestens eine mechanische Impulsgeber (4) zur Justierung des Bauelements (1) an das Gestell (5) an- und abkoppelbar ist, wobei die Ankoppelstelle als Verschraubung, Klemmung oder Bajonetthalterung ausgeführt ist.

7. Vorrichtung nach Anspruch 1,
bei der mechanische Impulsgeber (4) ein elektromagnetisch betriebenes Schlagwerk ist.

8. Vorrichtung nach Anspruch 1,
bei der mechanische Impulsgeber (4) durch hydraulische oder pneumatische Druckänderungen hervorgerufene Kräfte benutzt.

9. Vorrichtung nach Anspruch 4,
bei der die Klemmvorrichtung (3) für die Halterung des Bauelementes (1) als kugelpfannenförmiges Lager ausgebildet ist.

## Claims

1. Device for adjusting an optical component (1), particularly for adjusting a multi-mirror polygon, comprising a support (5) and at least one clamping means (3) connected to said support for fastening a mount (2) for said component to be adjusted (1) with a required retaining force,
comprising at least one mechanical impulse generator (4) connected to said support (5), which acts upon the mount of said component to be adjusted (1) so as to move said mount (2) in said clamping means and to achieve an envisaged final adjusted position, wherein said at least one mechanical impulse generator (4) acts upon said mount (2) of said component to be adjusted (1) by an impulse in the manner of a mobile hammer.

2. Device according to Claim 1,
wherein the actual position of said component (1) may be determined by means of a measuring unit (7), said measuring unit (7) is connected to actuator means (6), in which the actual position may be compared against the set position, and said actuator means (6) is connected to at least one impulse generator (4) for producing at least one mechanical impulse so as to permit a movement of said component (1) into the set position.

3. Device according to Claim 1,
wherein said component is at least one mirror (1) which is assembled, together with its mount (2), by clamping on a base late (5) forming said mounting support, by means of said clamping device.

4. Device according to Claim 3,
wherein the system for clamping on said base plate (5) by means of said clamping device is a system of clamping by adhesion which is applied already prior to the required adjustment with the retaining force required for the operating condition of said component (1).

5. Device according to the Claims 1 to 4,
comprising additional components formed by individual mirrors (1) and constituting a multi-mirror polygon whose reflecting surfaces are turned inside or outside.

6. Device according to Claim 1,
wherein said at least one mechanical impulse generator (4) for adjusting said component (1) is adapted to be coupled on and uncoupled from said support (5), with the coupling site being configured as screw, clamping or bayonet mount.

7. Device according to Claim 1,
wherein said mechanical impulse generator (4) is an electromagnetically operated impact mechanism.

8. Device according to Claim 1,
wherein said mechanical impulse generator (4) used forces generated by hydraulic or pneumatic pressure variations.

9. Device according to Claim 4,
wherein said clamping device (3) for mounting said component (1) is configured as a ball-cup shaped support.

## Revendications

1. Dispositif d'ajustage d'un élément optique, en particulier pour l'ajustage d'un polygone multi-miroir, comprenant une monture (5) et au moins un moyen de serrage (3), raccordé à ladite monture, pour l'attache d'un porte-élément (2) à supporter l'élément à ajuster (1) par une force de retenue requise,
qui comprend au moins un impulseur mécanique (4) raccordé à ladite monture (5), qui agit sur ledit porte-élément de l'élément à ajuster (1) ) de façon que ledit porte-élément (2) subit un mouvement dans ledit moyen de serrage et qu'une position ajustée finale envisagée soit achevée, ledit au moins un impulseur mécanique (4) agissant, par une impulsion, sur ledit porte-élément (2) dudit élément à ajuster (1) de la manière d'un maillet mobile.

2. Dispositif selon la revendication 1,
dans lequel la position réelle de l'élément (1) est déterminable moyennant un dispositif de mesure (7), ledit dispositif de mesure (7) est raccordé à un moyen de mise au point (6), la position réelle est comparable devant la position de consigne, et ledit moyen de mise au point (6) est relié à au moins un impulseur (4) de façon qu'au moins une impulsion mécanique peut être produite de façon à mouvoir ledit élément (1) dans la position de consigne.

3. Dispositif selon la revendication 1,
dans lequel ledit élément est au moins un miroir (1) qui, ensemble avec son porte-élément (2) est monté à serrage, moyennant dudit moyen de serrage, sur une plaque de montage (5) qui constitue ladite monture.

4. Dispositif selon la revendication 3,
dans lequel le serrage sur ladite plaque de montage (5), moyennant ledit moyen de serrage, est un système de serrage par adhérence, à laquelle est appliquée, déjà avant l'ajustage nécessaire, la force de retenue requise pour l'état de service dudit élément (1).

5. Dispositif selon les revendications 1 à 4,
comprenant des éléments supplémentaires, composés par des miroirs individuels, qui constituent un polygone multi-miroir, dont les facettes de miroir sont dirigés à l'intérieur ou à l'extérieur.

6. Dispositif selon la revendication 1,
dans lequel ledit au moins un impulseur mécanique (4) d'ajustage dudit élément (1) est adapté à être accouplé à et détaché de ladite monture (5), le point d'accouplement étant prévu pour un vissage, serrage, ou sous forme d'une attache à baïonnette.

7. Dispositif selon la revendication 1,
dans lequel ledit impulseur mécanique (4) est un mécanisme de frappe à actionnement électromagnétique.

8. Dispositif selon la revendication 1,
dans lequel ledit impulseur mécanique (4) utilise des forces dues aux variations de pression hydraulique ou pneumatique.

9. Dispositif selon la revendication 4,
dans lequel ledit moyen de serrage (3) à retenir ledit élément (1) est configuré sous forme d'un support sous forme de cuvette rotule.
